# EUROPÄISCHE PATENTSCHRIFT

(11) **EP 2 188 327 B1**
(45) Veröffentlichungstag und Bekanntmachung des Hinweises auf die Patenterteilung: **26.01.2011**
(21) Anmeldenummer: 08785613.4
(22) Anmeldetag: 19.08.2008
(51) Int. Cl.: C08J 5/00, C08L 69/00

(54) **VERFAHREN ZUR HERSTELLUNG SCHLAGZÄHMODIFIZIERTER GEFÜLLTER POLYCARBONAT-ZUSAMMENSETZUNGEN**
METHOD FOR THE PRODUCTION OF IMPACT-MODIFIED, FILLED POLYCARBONATE COMPOSITIONS
PROCÉDÉ DE PRODUCTION DE COMPOSITIONS DE POLYCARBONATE CHARGÉES, MODIFIÉES CHOC

(30) Priorität: 30.08.2007 DE 102007040927
(43) Veröffentlichungstag der Anmeldung: 26.05.2010
(73) Patentinhaber: Bayer MaterialScience AG, 51368 Leverkusen (DE)
(72) Erfinder: FELDERMANN, Achim, 40477 Düsseldorf (DE); SEIDEL, Andreas, 41542 Dormagen (DE); BIERDEL, Michael, 51373 Leverkusen (DE); RUDOLF, Reiner, 51373 Leverkusen (DE)
(86) Internationale Anmeldenummer: PCT/EP2008/006795
(87) Internationale Veröffentlichungsnummer: WO 2009/030358

(56) Entgegenhaltungen:
- EP-A- 1 589 079
- WO-A-03/038837

## Beschreibung

Die vorliegende Erfindung betrifft ein Verfahren zur Herstellung schlagzähmodifizierter mit Kohlenstoffnanoröhrchen gefüllter Polycarbonat-Zusammensetzungen und Formmassen, wobei der Abbau des Molekulargewichts des Polycarbonats während der Compoundierung gegenüber aus dem Stand der Technik bekannten Verfahren verbessert ist.

WO-A 2001/92381 beschreibt ein Verfahren zur Einarbeitung von CNT Agglomeraten in eine Polymermatrix durch hydrodynamische Beanspruchung. Auf diese Weise wird ein Aufbrechen der Agglomerate erreicht.

WO-A 2003/079375 beansprucht polymeres Material, das durch die Zugabe von Carbon Nanotubes mechanisch und elektrisch verbesserte Eigenschaften zeigt. Die Carbon Nanotubes sind von Katalysatorresten sowie von Katalysatorträger durch eine Wäsche gereinigt. Es wird auch ein Prozess zur Herstellung solcher verstärkter Materialien durch Einarbeitung in der Schmelze beansprucht.

WO-A 2005/015574 offenbart Zusammensetzungen enthaltend organisches Polymer und Kohlenstoffnanoröhrchen (im folgenden auch als "Carbon Nanotubes" bzw. "CNT" bezeichnet), die seilartige Agglomerate bilden und mindestens 0.1% Verunreinigungen enthalten. Die Zusammensetzungen zeichnen sich durch einen erniedrigten elektrischen Widerstand sowie ein Mindestmaß an Kerbschlagzähigkeit aus. Es wird auch ein Verfahren zur Einarbeitung von CNT offenbart, wobei hohe Scherkräfte angewandt werden sowie ein Verfahren mit Hilfe eines Masterbatches.

US 5591382 A offenbart Polymerzusammensetzungen enthaltend Kohlenstoff-Fibrillen, die wenigstens zum Teil in Form von Agglomeraten vorliegen. Die Agglomerate übersteigen eine Größe von 35µm nicht. Die Zusammensetzungen zeichnen sich durch verringerte elektrische Widerstände in Kombination mit einem Mindestmaß an Kerbschlagzähigkeit aus. Es wird auch eine Polymerzusammensetzung offenbart, bei der durch einen Einarbeitungsprozess mit Hilfe von Scherkräften Agglomerate der Kohlenstoff-Fibrillen aufgebrochen werden.

US 6265466 B1 offenbart eine Polymerzusammensetzung aus Polymermaterial und CNT, die elektromagnetische Abschirmung bietet sowie ein Verfahren zu ihrer Herstellung. Das Verfahren beinhaltet die Verwendung von Scherkräften z.B. bei der Extrusion, um die CNT zu orientieren. JP-A 2006-083195 offenbart Polycarbonat-Zusammensetzungen enthaltend CNT und Polyolefine. Es wird auch ein Verfahren zu ihrer Herstellung beansprucht, bei der zunächst das Polyolefin mit den CNT gemischt und anschließend das Polycarbonat hinzugefügt wird.

Es war somit Aufgabe der vorliegenden Erfindung, ein Verfahren zur Herstellung schlagzähmodifizierter mit Kohlenstoffnanoröhrchen (im Folgenden auch als "CNT" oder "faserförmigen Graphitmaterialien" bezeichnet) gefüllter Polycarbonat-Zusammensetzungen und Formmassen bereitzustellen, wobei der Abbau des Molekulargewichts des Polycarbonats während der Compoundierung gegenüber aus dem Stand der Technik bekannten Verfahren verbessert ist.

Es wurde überraschend gefunden, dass die durch Abbaureaktionen des Polycarbonats während der Compoundierung bedingte Abnahme des Molekulargewichts des Polycarbonats durch das erfindungsgemäße Verfahren verringert werden kann, welches dadurch gekennzeichnet ist, dass
(i) in einem ersten Schritt das CNT (Komponente C) mit kautschukhaltigem Vinyl-Copolymer (Komponente B) und/oder kautschukfreiem Vinyl-Copolymer (Komponente D) auf einem Zweischneckenextruder unter Erhalt des CNT-Masterbatches vermischt wird,
(ii) in einem zweiten Schritt das CNT-Masterbatch aus dem ersten Schritt mit aromatischem Polycarbonate und/oder aromatischem Polyestercarbonat (Komponente A) und ggf. weiteren Anteilen B und D sowie ggf. Additiven (Komponente E) auf einem Zweischneckenextruder vermischt wird.

In einer bevorzugten Ausführungsform wird der erste Schritt bei einer Temperatur von 240 bis 300 °C, besonders bevorzugt 260 bis 290 °C durchgeführt. Vorzugsweise beträgt das Verhältnis der Gewichtsteile der Komponente C zur Summe der Gewichtsteile der Komponenten B und D 2: 98 bis 25 : 75, besonders bevorzugt 5 : 95 bis 20 : 80. Die Komponenten C, B und/oder D werden gleichzeitig oder sequenziell, besonders bevorzugt gleichzeitig in den Zweischneckenextruder eingebracht. Vorzugsweise wird das resultierende Material nach dem ersten Schritt granuliert.

In einer bevorzugten Ausführungsform wird der zweite Schritt bei einer Temperatur von 240 - 300 °C, besonders bevorzugt 250 - 280 °C durchgeführt. Die Komponenten CNT-Masterbatch, A und ggf. weitere Anteile B und D sowie ggf. E werden gleichzeitig oder sequenziell, besonders bevorzugt gleichzeitig dosiert.

Im allgemeinen erfolgt die Vermischung in den Schritten 1 und 2 des erfindungsgemäßen Verfahrens bei gemäß dem Stand der Technik üblichen Drehzahlen und Durchsätzen, wobei diese Merkmale Drehzahl und Durchsatz die vorliegende Erfindung nicht limitieren.

Gegenstand der vorliegenden Erfindung sind auch Zusammensetzungen enthaltend
(i) kautschukhaltiges Vinyl-Copolymer (Komponente B) und/oder kautschukfreies Vinyl-Copolymer (Komponente D)
(ii) aromatisches Polycarbonat und/oder aromatisches Polyestercarbonat (Komponente A)
(iii) Kohlenstoffnanoröhrchen (Komponente C),
   dadurch gekennzeichnet, dass das mittleren Molekulargewichts (Mw) der Komponente A 95% bis 100% des mittleren Molekulargewichts (Mw) der Komponente A einer entsprechenden Zusammensetzung enthaltend die Komponenten A und B und/oder D ohne Komponente C beträgt.

In einer bevorzugten Ausführungsform enthalten diese Zusammensetzungen
A) 30 bis 94 Gew.-Teile, vorzugsweise 49 bis 73 Gew.-Teile Komponente A,
B) 5 bis 30 Gew.-Teile, vorzugsweise 10 bis 20 Gew.-Teile Komponente B,
C) 1 bis 10 Gew.-Teile, vorzugsweise 2 bis 6 Gew.-Teile Komponente C und
D) 0 bis 30 Gew.-Teile, vorzugsweise 15 bis 25 Gew.-Teile Komponente D,
   wobei die Angabe der Gew.-Teile jeweils auf die Summe der Gewichtsteile A+B+C+D bezogen ist und wobei die Summe der Gew.-Teile der Komponenten A+B+C+D = 100 normiert ist.

### Komponente A

Erfindungsgemäß geeignete aromatisches Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 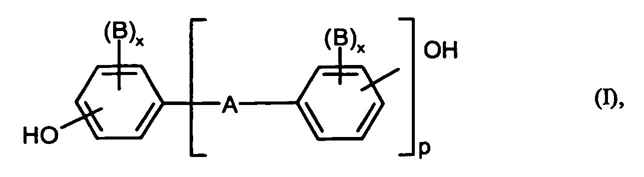 wobei
- A: eine Einfachbindung, C₁ bis C₅-Alkylen, C₂ bis C₅-Alkyliden, C₅ bis C₆-Cycloalkyliden, - O-, -SO-, -CO-, -S-, -SO₂-, C₆ bis C₁₂-Arylen, an das weitere aromatische gegebenenfalls Heteroatome enthaltende Ringe kondensiert sein können, oder ein Rest der Formel (II) oder (III) 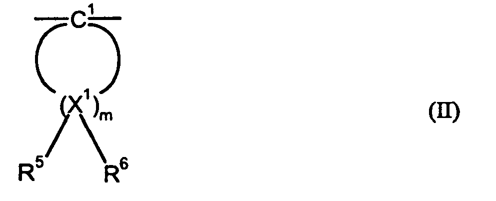 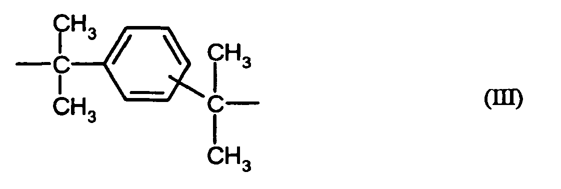
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆ Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di-und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

### Komponente B

Die Komponente B umfasst ein oder mehrere Pfropfpolymerisate von
- B.1: 5 bis 95, vorzugsweise 30 bis 90 Gew.-%, wenigstens eines Vinylmonomeren auf
- B.2: 95 bis 5, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage B.2 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere B.1 sind vorzugsweise Gemische aus
- B.1.1: 50 bis 99 Gew.-Teilen Vinylaromaten und/oder kemsubstituierten Vinylaromaten (wie Styrol, α-Methylstyrol, p-Methylstyrol, p-Chlorstyrol) und/oder (Meth)Acrylsäure-(C₁- C₈)-Alkylester, wie Methylmethacrylat, Ethylmethacrylat), und
- B.1.2: 1 bis 50 Gew.-Teilen Vinylcyanide (ungesättigte Nitrile wie Acrylnitril und Methacrylnitril) und/oder (Meth)Acrylsäure-(C₁-C₈)-Alkylester, wie Methyl- methacrylat, n-Butylacrylat, t-Butylacrylat, und/oder Derivate (wie Anhydride und Imide) ungesättigter Carbonsäuren, beispielsweise Maleinsäureanhydrid und N-Phenyl- Maleinimid.

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat. Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke. Weitere geeignete Grundlagen sind Gemische aus Silikonkautschuk und Acrylatkautschuk, wobei beispielsweise diese beiden Kautschuktypen als physikalisches Gemisch vorliegen oder wobei beispielsweise der Silikonkautschuk und Acrylatkautschuk herstellungsbedingt ein interpenetrierendes Netzwerk ausbilden oder beispielsweise der Silikonkautschuk und Acrylatkautschuk eine Pfropfgrundlage ausbilden, die eine Kem-Schale-Struktur aufweist.

Bevorzugte Pfropfgrundlagen B.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb < 10°C, vorzugsweise < 0°C, besonders bevorzugt < -10°C liegt. Besonders bevorzugt ist reiner Polybutadienkautschuk.

Besonders bevorzugte Polymerisate B sind beispielsweise ABS-Polymerisate (Emulsions-, Masse-und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die im Emulsionspolymerisationsverfahren durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl-und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di-und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2. Bei cyclischen vernetzenden Monomeren mit mindestens drei ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente C

Unter Kohlenstoffnanoröhrchen (CNT) werden vorzugsweise zylinderförmige Kohlenstoffröhren mit einem Kohlenstoffgehalt von > 95% verstanden, wobei diese keinen amorphen Kohlenstoff enthalten. Die Kohlenstoffnanoröhrchen weisen vorzugsweise einen äußeren Durchmesser zwischen 3 und 80 nm, besonders bevorzugt 5 bis 20 nm auf. Der Mittelwert des äußeren Durchmessers beträgt bevorzugt 13 bis 16 nm. Die Länge der zylinderförmigen Kohlenstoffnanoröhrchen beträgt bevorzugt 0,1 bis 20 µm, besonders bevorzugt 1 bis 10 µm. Die Kohlenstoffnanoröhrchen bestehen vorzugsweise aus 2 bis 50, besonders bevorzugt 3 bis 15 graphitischen Lagen (auch als "Schichten" oder "Wände" bezeichnet), die einen kleinsten Innendurchmesser von 2 bis 6 nm aufweisen. Diese Kohlenstoffnanoröhrchen werden beispielsweise auch als "Carbon Fibrils" oder "Hollow Carbon fibers" bezeichnet.

Die Herstellung der erfindungsgemäß eingesetzten CNT ist allgemein bekannt (vgl. z.B. US-A 5 643 502 und DE-A 10 2006 017 695), bevorzugt erfolgt die Herstellung nach dem in DE-A 10 2006 017 695, besonders bevorzugt nach dem in Beispiel 3 der DE-A 10 2006 017 695 offenbarten Verfahren.

### Komponente D

Die Komponente D umfasst ein oder mehrere thermoplastische Vinyl(Co)Polymerisate D.1 und/oder Polyalkylenterephthalate D.2.

Geeignet sind als Vinyl(Co)Polymerisate D. Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
- D.1.1: 50 bis 99, vorzugsweise 60 bis 80 Gew.-Teilen Vinylaromaten und/oder kernsubstituierten Vinylaromaten wie Styrol, α-Methylstyrol, p-Methylstyrol, p-Chlorstyrol) und/oder (Meth)Acrylsäure-(C₁-C₈)-Alkylester, wie Methylmethacrylat, Ethylmethacrylat), und
- D.1.2: 1 bis 50, vorzugsweise 20 bis 40 Gew.-Teilen Vinylcyanide (ungesättigte Nitrile) wie Acryl-nitril und Methacrylnitril und/oder (Meth)Acryl-säure-(C₁-C₈)-Alkylester, wie Methylmeth-acrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate D.1 sind harzartig, thermoplastisch und kautschukfrei. Besonders bevorzugt ist das Copolymerisat aus D.1.1 Styrol und F.1.2 Acrylnitril.

Die (Co)Polymerisate gemäß D.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

Die Polyalkylenterephthalate der Komponente D.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.%, vorzugsweise mindestens 90 Gew.%, bezogen auf die Dicarbonsäurekomponente Terephthalsäurereste und mindestens 80 Gew.-%, vorzugsweise mindestens 90 Mol-%, bezogen auf die Diolkomponente Ethylenglykol-und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Weitere Zusatzstoffe, Komponente E

Die Zusammensetzung kann als Komponente E weitere Zusätze enthalten. Als weitere Zusätze gemäß Komponente E kommen insbesondere übliche Polymeradditive wie Flammschutzmittel (z.B. organische Phosphor- oder Halogenverbindungen, insbesondere Bisphenol-A basierendes Oligophosphat), Antidrippingmittel (beispielsweise Verbindungen der Substanzklassen der fluorierten Polyolefine, der Silikone sowie Aramidfasern), Gleit- und Entformungsmittel, beispielsweise Pentaerythrittetrastearat, Nukleiermittel, Antistatika, Stabilisatoren, von CNT verschiedene Füll- und Verstärkungsstoffe (beispielsweise Talk, Glasfasern, Glimmer, Kaolin, CaCO₃ und Glasschuppen) sowie Farbstoffe und Pigmente (beispielsweise Titandioxid oder Eisenoxid) in Frage.

Beispielsweise enthalten die erfindungsgemäßen Zusammensetzungen 0,01 bis 30 Gew.-Teile, bevorzugt 0,1 bis 15 Gew.-Teile (jeweils bezogen auf die Summe der Gewichtsteile der Komponenten A+B+C+D = 100) der Zusatzstoffe gemäß Komponente E).

Gegenstand der Erfindung sind auch die Zusammensetzungen, welche nach dem erfindungsgemäßen Verfahren erhältlich sind.

Diese Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karrosserie- bzw. Innenbauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär-und Badausrüstungen, Abdeckgitter für Lüfteröffnungen und Gehäuse für Gartengeräte.

Die folgenden Beispiele dienen der weiteren Erläuterung der Erfindung.

### Beispiele

### Komponente A

Lineares Polycarbonat auf Basis Bisphenol-A mit einem gewichtsgemittelten Molekulargewicht Mw von 27500 g/mol (bestimmt durch GPC).

### Komponente B

Bei der Komponente B handelt es sich um eine Mischung aus 50 Gew.-% Komponente B-1 und 50 Gew.-% Komponente B-2.

Komponente B-1:
Copolymerisat aus 72 Gew.-% Styrol und 28 Gew.-% Acrylnitril mit einem gewichtsgemittelten Molekulargewicht M_{w} von 130 kg/mol (bestimmt durch GPC), hergestellt nach dem Masseverfahren.

Komponente B-2:
ABS-Polymerisat, hergestellt durch Emulsions-Polymerisation von 43 Gew.-% (bezogen auf das ABS-Polymerisat) einer Mischung aus 27 Gew.-% Acrylnitril und 73 Gew.-% Styrol in Gegenwart von 57 Gew.-% (bezogen auf das ABS-Polymerisat) eines teilchenförmig vernetzten Polybutadienkautschuks (mittlerer Teilchendurchmesser d₅₀ = 0,35 µm).

### Komponente C

### Komponente C-0:

Herstellung:
500 mg eines Katalysators bestehend aus den Aktivkomponenten Mangan (37 Gew.-%) und Kobalt (43 Gew.-%) sowie den Trägermaterialien Magnesiumoxid (10 Gew.-%) und Aluminiumoxid (10 Gew.-%) werden in einen Quarzglas-Wirbelschichtreaktor mit einem Innendurchmesser von 49 mm gegeben. Die Katalysatorpartikeln haben einen Durchmesser zwischen 100 µm und 125 µm.
   Der Reaktor wird von außen auf eine Temperatur von 650°C beheizt, nach Inertisierung wird ein Gasgemisch bestehend aus 40 Vol.-% Ethylen, 40 Vol.-% Wasserstoff und 20 Vol.-% Stickstoff mit einer Temperatur von 25 °C durch eine Glasfritte am unteren Ende des Reaktors in den Apparat geleitet; die Gasleerrohrgeschwindigkeit bei Betriebsbedingungen beträgt 31,64 cm/s. Am Katalysator bilden sich Kohlenstoffnanoröhrchen, wodurch die Katalysatorpartikel gesprengt werden und Agglomeratpartikeln aus Kohlenstoffnanoröhrchen und Katalysatorresten entstehen.
   Die Temperaturen im Reaktor an Positionen 1 cm, 5 cm und 15 cm oberhalb der Glasfritte werden beobachtet. Nach ca. 15 Minuten wird ein deutliches Absinken der Temperatur 1 cm oberhalb der Fritte beobachtet. Nach 31 Minuten wird die Reaktion beendet; nach Inertisierung und Abkühlung werden dem Reaktor 81 g Produkt entnommen, für das mittels Laserbeugungsmessung ein mittlerer Außendurchmesser d_{0,5} von 1.283 µm und ein maximaler Außendurchmesser d_{0,9} von 1.625 µm bestimmt wird. Bei dem entnommenen Produkt handelt es sich um Agglomerate von zylinderförmige Kohlenstoffröhren mit einem Kohlenstoffgehalt von > 95%, welche keinen amorphen Kohlenstoff enthalten. Die Kohlenstoffnanoröhrchen weisen einen äußeren Durchmesser zwischen 5 bis 20 nm und einem Mittelwert des äußeren Durchmessers von 13 bis 16 nm auf. Die Länge der zylinderförmigen Kohlenstoffnanoröhrchen beträgt 0,1 bis 20 µm. Die Kohlenstoffnanoröhrchen bestehen aus 3 bis 15 graphitischen Lagen, die einen kleinsten Innendurchmesser von 2 bis 6 nm aufweisen.

### Komponente D

Copolymerisat aus 77 Gew.-% Styrol und 23 Gew.-% Acrylnitril mit einem gewichtsgemittelten Molekulargewicht M_{w} von 130 kg/mol (bestimmt durch GPC), hergestellt nach dem Masseverfahren.

### Komponente E

- **E-1**:: Pentaerythrittetrastearat als Gleit-/Entformungsmittel
- **E-2:**: Phosphitstabilisator, Irganox^{®} B 900, Fa. Ciba Speciality Chemicals
- **E-3:**: Zitronensäure wasserfrei

### Herstellung der Formmasse des Vergleichsbeispiels 1:

Auf einem Zweischneckenextruder (ZSK-25) (Fa. Werner und Pfleiderer) werden die Komponenten A, B, D und E in dem jeweiligen in Tabelle 1 aufgeführten Gewichtsverhältnis bei einer Drehzahl von 225 Upm und einem Durchsatz von 20 kg/h bei einer Temperatur von 260°C vermischt und anschließend granuliert. Alle Komponenten werden gleichzeitig in den Zweischneckenextruder eingebracht.

### Erstellung der Formmassen der Vergleichsbeispiele 2 bis 4:

### (i) erster Schritt: Herstellung der Komponente C-1 (Vergleich)

Es werden 15 Gew.-% der Komponente C-0 mit 85 Gew.-% Komponente A auf einem Zweischneckenextruder (ZSK-25) (Fa. Werner und Pfleiderer) bei einer Drehzahl von 225 Upm, bei einem Durchsatz von 13 kg/h und bei einer Temperatur von 280°C gleichzeitig dosiert, vermischt und anschließend granuliert, wobei das CNT-Masterbatch C-1 erhalten wird.

### (ii) zweiter Schritt:

Das CNT-Masterbatch C-1 wird auf einem Zweischneckenextruder (ZSK-25) (Fa. Werner und Pfleiderer) mit den weiteren Komponenten A, B, D und E in den in Tabelle 1 aufgeführten Gewichtsverhältnis bei einer Drehzahl von 225 Upm und einem Durchsatz von 20 kg/h bei einer Temperatur von 260°C vermischt und anschließend granuliert. Alle Komponenten werden gleichzeitig in den Zweischneckenextruder eingebracht.

### Herstellung der Formmassen der erfindungsgemäßen Beispiele 5 bis 7:

### (i) erster Schritt: Herstellung der Komponente C-2 (erfindungsgemäß)

Es werden 15 Gew.-% der Komponente C-0 mit 72,25 Gew.-% Komponente B und 12,75 Gew.-% Komponente C auf einem Zweischneckenextruder (ZSK-25) (Fa. Werner und Pfleiderer) bei einer Drehzahl von 225 Upm, bei einem Durchsatz von 10 kg/h und bei einer Temperatur von 280°C gleichzeitig dosiert, vermischt und anschließend granuliert, wobei das CNT-Masterbatch C-2 erhalten wird.

### (ii) zweiter Schritt:

Das CNT-Masterbatch C-2 wird auf einem Zweischneckenextruder (ZSK-25) (Fa. Werner und Pfleiderer) mit den weiteren Komponenten A, B, D und E in dem jeweiligen in Tabelle 1 aufgeführten Gewichtsverhältnis bei einer Drehzahl von 225 Upm und einem Durchsatz von 20 kg/h bei einer Temperatur von 260°C vermischt und anschließend granuliert. Alle Komponenten werden gleichzeitig in den Zweischneckenextruder eingebracht.

### Analytische Auswertung und Berechung der Verringerung des Mw des Polycarbonatanteils der Formmassen:

Das jeweilige mittlere Molekulargewicht (Mw) des Polycarbonatanteils der resultierenden Formmassen wird mittels GPC (gegenüber Standards aus Bisphenol A Polycarbonat) bestimmt.

Als Maß für die Verringerung des mittleren Molekulargewichts (ΔMw) des Polycarbonatanteils der resultierenden Formmassen wird die Differenz ermittelt, die sich aus dem mittleren Molekulargewicht des Polycarbonatanteils des Vergleichbeispiels 1 und dem jeweils mittleren Molekulargewicht des Polycarbonatanteils der CNT-haltigen Formmasse ergibt. Gemäß der vorliegenden technischen Aufgabe ist ein möglichst niedriger Wert für ΔMw zu erstreben.

**Tabelle 1: Zusammensetzung der Formmassen und ihre Eigenschaften**

| Zusammensetzung [Gew.-%] | **1 (Vgl.)** | **2 (Vgl.)** | **3 (Vgl.)** | **4 (Vgl.)** | **5** | **6** | **7** |
|---|---|---|---|---|---|---|---|
| A | 59,1 | 46,8 | 35,0 | 23,7 | 57,9 | 56,8 | 55,7 |
| B | 34,0 | 33,3 | 32,7 | 32,1 | 23,9 | 14,2 | 4,8 |
| C-1 | - | 13,1 | 25,6 | 37,7 | - | - | - |
| C-2 | - | - | - | - | 13,1 | 25,6 | 37,7 |
| D | 6,0 | 5,9 | 5,8 | 5,7 | 4,2 | 2,5 | 0,8 |
| E-1 | 0,75 | 0,73 | 0,72 | 0,71 | 0,73 | 0,72 | 0,71 |
| E-2 | 0,12 | 0,12 | 0,12 | 0,11 | 0,12 | 0,12 | 0,11 |
| E-3 | 0,1 | 0,1 | 0,1 | 0,1 | 0,1 | 0,1 | 0,1 |
| berechnete Anteile: | | | | | | | |
| Anteil Polycarbonat [%] | 59,1 | 57,9 | 56,8 | 55,7 | 57,9 | 56,8 | 55,7 |
| Anteil Propfpolymerisat [%] | 17 | 16,7 | 16,3 | 16,0 | 16,7 | 16,3 | 16,0 |
| Anteil CNT [%] | | 2,0 | 3,8 | 5,7 | 2,0 | 3,8 | 5,7 |
| Anteil SAN [%] | 23 | 22,5 | 22,1 | 21,7 | 22,5 | 22,1 | 21,7 |
| Eigenschaften: | | | | | | | |
| Mw (Polycarbonatanteil) [g/mol] | 25400 | 23400 | 20800 | 18300 | 24900 | 24900 | 24200 |
| ΔMw (Polycarbonatanteil gegenüber Vgl. 1) [g/mol] | - | 2000 | 4600 | 7100 | 500 | 500 | 1200 |

Aus den Beispielen geht hervor, dass das erfindungsgemäße Verfahren (Bsp. 5 - 7) gegenüber den Vergleichsbeispielen 2 - 4 zu einer deutlich geringeren Abnahme des mittleren Molekulargewichts (Mw) des Polycarbonatanteils in den resultierenden Formmassen führt. Selbst bei der höchsten Konzentration an Kohlenstoffnanoröhrchen (CNT) ist unter Verwendung des erfindungsgemäßen Verfahrens (Bsp. 7) die Reduzierung des mittleren Molekulargewichts (Mw) des Polycarbonatanteils lediglich gering (d.h. kleiner Wert für ΔMw), während bei den Vergleichsbeispielen bereits mit der niedrigsten Konzentration an Kohlenstoffnanoröhrchen (Bsp. 2) das Mw des Polycarbonatanteils in den resultierenden Formmassen deutlicher sinkt (großer Wert für ΔMw).

## Patentansprüche

1. Verfahren zur Herstellung schlagzähmodifizierter mit Kohlenstoffnanoröhrchen (CNT) gefüllter Polycarbonat-Zusammensetzungen, **dadurch gekennzeichnet ist, dass**
(i) in einem ersten Schritt das CNT (Komponente C) mit kautschukhaltigem Vinyl-Copolymer (Komponente B) und/oder kautschukfreiem Vinyl-Copolymer (Komponente D) auf einem Zweischneckenextruder unter Erhalt des CNT-Masterbatches vermischt wird,
(ii) in einem zweiten Schritt das CNT-Masterbatch aus dem ersten Schritt mit aromatischem Polycarbonat und/oder aromatischem Polyestercarbonat (Komponente A) und ggf. weiteren Anteilen B und D sowie ggf. weiteren Additiven (Komponente E) auf einem Zweischneckenextruder vermischt wird.

2. Verfahren gemäß Anspruch 1, **dadurch gekennzeichnet, dass** der erste Schritt bei einer Temperatur von 240 bis 300°C durchgeführt wird.

3. Verfahren gemäß Anspruch 1 oder 2, **dadurch gekennzeichnet, dass** im ersten Schritt das Verhältnis der Gewichtsteile der Komponente C zur Summe der Gewichtsteile der Komponenten B und D 2 : 98 bis 25 : 75 beträgt.

4. Verfahren gemäß einem der Ansprüche 1 bis 3, **dadurch gekennzeichnet, dass** im ersten Schritt die Komponenten C, B und/oder D gleichzeitig in den Zweischneckenextruder eingebracht werden.

5. Verfahren gemäß einem der Ansprüche 1 bis 4, **dadurch gekennzeichnet, dass** der zweite Schritt bei einer Temperatur von 240 - 300°C durchgeführt wird.

6. Verfahren gemäß einem der Ansprüche 1 bis 5, **dadurch gekennzeichnet, dass** im zweiten Schritt die Komponente CNT-Masterbatch, Komponente A und ggf. weiteren Anteilen der Komponenten B und D sowie ggf. E gleichzeitig oder sequenziell dosiert werden.

7. Verfahren gemäß einem der Ansprüche 1 bis 6, **dadurch gekennzeichnet, dass** nach dem ersten Schritt die resultierende Mischung granuliert wird.

8. Verfahren gemäß Anspruch 1, wobei Komponente E) ausgewählt ist aus der Gruppe bestehend aus Flammschutzmittel, Antidrippingmittel, Gleit- und Entformungsmittel, Nukleiermittel, Antistatika, Stabilisatoren, von CNT verschiedene Füll- und Verstärkungsstoffe sowie Farbstoffe und Pigmente.

9. Zusammensetzung, erhältlich nach einem Verfahren gemäß einem der Ansprüche 1 bis 8.

10. Verwendung der Zusammensetzung gemäß Anspruch 9 zur Herstellung von Formkörpern.

11. Formkörper enthaltend eine Zusammensetzung gemäß Anspruch 9.

12. Zusammensetzung enthaltend
(i) kautschukhaltiges Vinyl-Copolymer (Komponente B) und/oder kautschukfreies Vinyl-Copolymer (Komponente D)
(ii) aromatisches Polycarbonat und/oder aromatisches Polyestercarbonat (Komponente A)
(iii) Kohlenstoffnanoröhrchen (Komponente C),
**dadurch gekennzeichnet, dass** das mittleren Molekulargewichts (Mw) der Komponente
A 95% bis 100% des mittleren Molekulargewichts (Mw) der Komponente A einer entsprechenden Zusammensetzung enthaltend die Komponenten A und B und/oder D ohne Komponente C beträgt.

13. Zusammensetzung gemäß Anspruch 12, wobei die Zusammensetzung 30 bis 94 Gew.-Teile Komponente A,
5 bis 30 Gew.-Teile Komponente B,
1 bis 10 Gew.-Teile Komponente C und
0 bis 30 Gew.-Teile Komponente D enthält,
wobei die Summe der Gew.-Teile der Komponenten A+B+C+D = 100 normiert ist.

14. Zusammensetzung gemäß Anspruch 12, wobei die Zusammensetzung 49 bis 73 Gew.-Teile Komponente A,
10 bis 20 Gew.-Teile Komponente B,
2 bis 6 Gew.-Teile Komponente C und
15 bis 25 Gew.-Teile Komponente D enthält,
wobei die Summe der Gew.-Teile der Komponenten A+B+C+D = 100 normiert ist.

## Claims

1. Process for producing impact-modified polycarbonate compositions filled with carbon nanotubes (CNT), **characterized in that**
(i) in a first step, the CNT (component C) is mixed with rubber-containing vinyl copolymer (component B) and/or with rubber-free vinyl copolymer (component D) on a twin screw extruder, to obtain the CNT masterbatch,
(ii) in a second step, the CNT masterbatch from the first step is mixed with aromatic polycarbonate and/or aromatic polyester carbonate (component A) and optionally with further fractions of B and D and also optionally with further additives (component E) on a twin screw extruder.

2. Process according to Claim 1, **characterized in that** the first step is carried out at a temperature of from 240 to 300°C.

3. Process according to Claim 1 or 2, **characterized in that**, in the first step, the ratio of the parts by weight of component C to the sum of the parts by weight of components B and D is 2:98 to 25:75.

4. Process according to any of Claims 1 to 3, **characterized in that**, in the first step, components C, B and/or D are introduced into the twin screw extruder simultaneously.

5. Process according to any of Claims 1 to 4, **characterized in that** the second step is carried out at a temperature of 240-300°C.

6. Process according to any of Claims 1 to 5, **characterized in that**, in the second step, the CNT masterbatch component, component A and optionally further fractions of components B and D and also optionally E are fed simultaneously or sequentially.

7. Process according to any of Claims 1 to 6, **characterized in that**, after the first step, the resulting mixture is granulated.

8. Process according to Claim 1, where component E) is selected from the group consisting of flame retardants, anti-drip agents, lubricants, mould release agents, nucleating agents, antistatics, stabilizers, fillers and reinforcing agents other than CNT, and also dyes and pigments.

9. Composition obtainable by a process according to any of Claims 1 to 8.

10. Use of the composition according to Claim 9 for producing mouldings.

11. Moulding comprising a composition according to Claim 9.

12. Composition comprising
(i) rubber-containing vinyl copolymer (component B) and/or rubber-free vinyl copolymer (component D)
(ii) aromatic polycarbonate and/or aromatic polyester carbonate (component A)
(iii) carbon nanotubes (component C),
**characterized in that** the average molecular weight (Mw) of component A is 95% to 100% of the average molecular weight (Mw) of component A of a corresponding composition comprising components A and B and/or D without component C.

13. Composition according to Claim 12, where the composition comprises 30 to 94 parts by weight of component A,
5 to 30 parts by weight of component B,
1 to 10 parts by weight of component C and
0 to 30 parts by weight of component D,
the sum of the parts by weight of components A + B + C + D being standardized to = 100.

14. Composition according to Claim 12, where the composition comprises 49 to 73 parts by weight of component A,
10 to 20 parts by weight of component B,
2 to 6 parts by weight of component C and
15 to 25 parts by weight of component D,
the sum of the parts by weight of components A + B + C + D being standardized to = 100.

## Revendications

1. Procédé de fabrication de compositions de Polycarbonate à résistance aux impacts modifiée, chargées avec des nanotubes de carbone (CNT), **caractérisé en ce que**
(i) lors d'une première étape, le CNT (composant C) est mélangé avec un copolymère de vinyle contenant du caoutchouc (composant B) et/ou un copolymère de vinyle sans caoutchouc (composant D) dans une extrudeuse bivis pour obtenir le mélange maître de CNT,
(ii) lors d'une seconde étape, le mélange maître de CNT de la première étape est mélangé avec un Polycarbonate aromatique et/ou un polyester-carbonate aromatique (composant A) et éventuellement des fractions B et D supplémentaires, ainsi qu'éventuellement des additifs supplémentaires (composant E) dans une extrudeuse bivis.

2. Procédé selon la revendication 1, **caractérisé en ce que** la, première étape est réalisée à une température de 240 à 300°C.

3. Procédé selon la revendication 1 ou 2, **caractérisé en ce que**, lors de la première étape, le rapport entre les parties en poids du composant C et la somme des parties en poids des composants B et D est de 2 : 98 à 25:75.

4. Procédé selon l'une quelconque des revendications 1 à 3, **caractérisé en ce que**, lors de la première étape, les composants C, B et/ou D sont introduits simultanément dans l'extrudeuse bivis.

5. Procédé selon l'une quelconque des revendications 1 à 4, **caractérisé en ce que** la seconde étape est réalisée à une température de 240 à 300 °C.

6. Procédé selon l'une quelconque des revendications 1 à 5, **caractérisé en ce que**, lors de la seconde étape, le composant mélange maître de CNT, le composant A et éventuellement des fractions supplémentaires des composants B et D, ainsi qu'éventuellement E, sont introduits simultanément ou séquentiellement.

7. Procédé selon l'une quelconque des revendications 1 à 6, **caractérisé en ce que** le mélange résultant après la première étape est granulé.

8. Procédé selon la revendication 1, dans lequel le composant E) est choisi dans le groupe constitué par les agents ignifuges, les agents anti-égouttement, les agents lubrifiants et de démoulage, les agents de nucléation, les antistatiques, les stabilisateurs, les charges et matériaux de renforcement différents des CNT, ainsi que les colorants et les pigments.

9. Composition, pouvant être obtenue par un procédé selon l'une quelconque des revendications 1 à 8.

10. Utilisation de la composition selon la revendication 9 pour la fabrication de corps moulés.

11. Corps moulé contenant une composition selon la revendication 9.

12. Composition contenant
(i) un copolymère de vinyle contentant du caoutchouc (composant B) et/ou un copolymère de vinyle sans caoutchouc (composant D)
(ii) un polycarbonate aromatique et/ou un polyestercarbonate aromatique (composant A)
(iii) des nanotubes de carbone (composant C), **caractérisée en ce que** le poids moléculaire moyen (Mw) du composant A est de 95 % à 100 % du poids moléculaire moyen (Mw) du composant A d'une composition correspondante qui contient les composants A et B et/ou D sans le composant C.

13. Composition selon la revendication 12, dans laquelle la composition contient
30 à 94 parties en poids du composant A,
5 à 30 parties en poids du composant B,
1 à 10 parties en poids du composant C et
0 à 30 parties en poids du composant D,
la somme des parties en poids des composants A+B+C+D étant normée à 100.

14. Composition selon la revendication 12, dans laquelle la Composition contient
49 à 73 parties en poids du composant A,
10 à 20 parties en poids du composant B,
2 à 6 parties en poids du composant C et
15 à 25 parties en poids du composant D,
la somme des parties en poids des composants A+B+C+D étant normée à 100.
